# EUROPÄISCHE PATENTSCHRIFT

(11) **EP 2 687 320 B1**
(45) Veröffentlichungstag und Bekanntmachung des Hinweises auf die Patenterteilung: **02.09.2020**
(21) Anmeldenummer: 13176053.0
(22) Anmeldetag: 11.07.2013
(51) Int. Cl.: B25B 29/02, B23P 19/06, F16B 31/02, F16B 31/04

(54) **Spannvorrichtung zum Dehnen eines Gewindebolzens**
Tensioning device for extending a threaded bolt
Dispositif de serrage pour l'étirement d'un boulon fileté

(30) Priorität: 18.07.2012 DE 102012106503
(43) Veröffentlichungstag der Anmeldung: 22.01.2014
(73) Patentinhaber: Hohmann, Frank, 59581 Warstein (DE); Hohmann, Jörg, 59872 Meschede (DE)
(72) Erfinder: Hohmann, Frank, 59581 Warstein (DE); Hohmann, Jörg, 59872 Meschede (DE)
(74) Vertreter: Christophersen Patentanwälte

(56) Entgegenhaltungen:
- EP-A2- 1 764 596
- WO-A1-2006/027060
- DE-A1-102005 015 922
- DE-U1- 9 316 464
- JP-A- H03 204 406
- JP-A- 2009 107 114
- JP-U- S63 120 142
- US-A- 5 249 208

## Beschreibung

Die Erfindung betrifft eine Spannvorrichtung zum Dehnen eines Gewindebolzens durch Zug an dessen Gewindeendabschnitt, mit einem den Gewindeendabschnitt umgebenden Stützrohr, einem in Verlängerung des Stützrohrs angeordneten Zylinder mit mindestens einem darin in Längsrichtung bewegbaren, mit einer Hydraulikversorgung verbindbaren Kolben, einer mit dem Gewindeendabschnitt verschraubbaren, durch den Kolben axial mitnehmbar ausgebildeten Wechselbuchse, und einem in Längsrichtung beweglich angeordneten Stift, dessen Stiftende gegen das den Gewindeendabschnitt aufweisende Ende des Gewindebolzens in Längsrichtung abstützbar ist.

Eine hydraulisch arbeitende Bolzenspannvorrichtung mit diesen Merkmalen ist aus der WO 2010/054959 A1 bekannt. Die Spannvorrichtung weist Maßnahmen zur Kontrolle des Gewindeüberstandes auf, d.h. der Länge des von der Wechselbuchse erfassten Gewindeendabschnitts des Gewindebolzens. Zu diesem Zweck ist die Wechselbuchse mit einem Längskanal versehen, in dem längsverschieblich ein Messstab sitzt. Dieser stützt sich mit seinem unteren Ende in Längsrichtung gegen die Stirnfläche des zu spannenden Gewindebolzens ab. An seinem anderen Ende ist der Messstab mit farbigen Markierungen versehen, anhand derer sich gegenüber der Wechselbuchse ablesen lässt, ob der Gewindeüberstand, also die Länge des von der Wechselbuchse erfassten Gewindeabschnitts, für den Spannprozess ausreichend groß ist. Mit dem Messstab nach der WO 2010/054959 A1 ist, bei entsprechender Aufmerksamkeit des Maschinenbedieners, eine Beurteilung des tatsächlich vorhandenen Gewindeüberstandes möglich. Fehlt es allerdings an der notwendigen Aufmerksamkeit, so sind Bedienfehler nicht ausgeschlossen.

Ferner geht aus der US 5,249,208 A ein Werkzeug zum Einsetzen und Entfernen von Bolzen hervor, umfassend eine Basis, die so angepasst ist, dass sie um einen Bolzen passt, eine Vielzahl von ersten Zugstangen, die sich von der Basis nach oben erstrecken, sowie eine erste Plattformeinrichtung, die mit der Mehrzahl von ersten Zugstangen verbunden ist und von dieser getragen wird. Ferner umfasst das Werkzeug Bolzengreifmittel, die auf der Mehrzahl von ersten Verbindungsstangen zwischen der Basis und der ersten Plattform angeordnet sind und entlang dieser bewegbar sind. Darüber hinaus umfasst das Werkzeug eine Greifkupplung, die innerhalb des Gehäuses angeordnet ist, um die Gewinde eines Bolzens in Gewindeeingriff zu bringen. Ein Greifring ist vorgesehen, der innerhalb der Greifkupplung angeordnet ist, um die Greifkupplung mit den Gewindegängen eines Bolzens auszurichten. Mit der Greifkupplung ist eine Antriebshülse verbunden, um die Greifkupplung zu drehen, um die Greifkupplung mit einem Bolzen in Gewindeeingriff zu bringen und von dieser zu lösen. Ferner weist das Werkzeug einen Antriebsmotor, sowie eine Antriebskupplung auf, wobei der Antriebsmotor die Antriebskupplung mittels der Antriebshülse so drehen kann, dass der Antriebskupplung mit einem Bolzen in Eingriff kommt, um durch die Drehung der Antriebskupplung die gleichzeitige Drehung des Bolzens und der Greifkupplung zu bewirken.

Die US 5,249,208 A offenbart die Merkmale des Oberbegriffes des Anspruchs 1.

Der Erfindung liegt die Aufgabe zugrunde, bei einer gattungsgemäßen Spannvorrichtung zum Dehnen eines Gewindebolzens zu einer erhöhten Sicherheit gegen eine für den Dehnprozess nicht ausreichende Gewindeeingriffslänge zu kommen.

Die Erfindung hat diese Aufgabe durch die in Anspruch 1 angegebene Spannvorrichtung gelöst.

Bei einer solchen Spannvorrichtung ist Voraussetzung vor Beginn jedes Bolzenspannprozesses, dass objektiv eine ausreichende tatsächliche Länge des Gewindeeingriffs zwischen Wechselbuchse und dem Ende des Gewindebolzens vorhanden ist. Hierzu ist erfindungsgemäß ein Mittel vorhanden, welches die Position des Stifts in Längsrichtung zu erfassen vermag. Mittels einer im Signalfluss nachgeordneten Auswerte- und Steuereinheit erfolgt ein Abgleich, ob die so erfasste Längsposition des Stifts einem intern vorgegebenen Mindestpositionswert entspricht, und daher objektiv von einer ausreichenden Gewindeeingriffslänge ausgegangen werden kann. Nur wenn dies der Fall ist, erfolgt durch die Auswerte- und Steuereinheit die grundsätzliche Freigabe der Hydraulikversorgung, so dass diese dann erst zum Aufbau des Hydraulikdrucks im Kolbenraum einschaltbar ist. Damit erzielt wird eine erhöhte Sicherheit, indem die Möglichkeit ausgeschaltet wird, dass aufgrund z. B. mangelnder Aufmerksamkeit die Spannvorrichtung bei unzureichender Gewindeeingriffslänge in Betrieb gesetzt wird. Ein In-Betrieb-setzen ist vielmehr erst möglich, nachdem zunächst die Auswerte- und Steuereinheit die Hydraulikversorgung grundsätzlich freigegeben hat.

Vorteilhafte Ausgestaltungen sind in den abhängigen Ansprüchen angegeben.

Gemäß einer bevorzugten Ausgestaltung der Spannvorrichtung kann Bestandteil der Auswerte- und Steuereinheit ein drahtloser Signalweg sein, mit einem an dem Zylinder angeordneten Sendemodul und einem im Bereich der Hydraulikversorgung angeordneten Empfangsmodul. Diese Ausgestaltung berücksichtigt den Umstand, dass bei gattungsgemäßen Spannvorrichtungen die Hydraulikversorgung einschließlich der den Druckaufbau steuernden Ventile über eine flexible Druckleitung mit dem eigentlichen Spannzylinder verbunden ist, und damit ein gewisser Abstand zwischen Spannzylinder und Hydraulikversorgung besteht. Zur Überbrückung dieses Abstands und um zusätzliche Leitungen zu vermeiden, ist eine Signalübertragung mittels Sende- und Empfangsmodul von Vorteil.

Gemäß einer weiteren vorteilhaften Ausgestaltung der Spannvorrichtung sind induktiv arbeitende Mittel zum Erfassen der Längsposition des Stifts vorgesehen.

Mit einer weiteren bevorzugten Ausgestaltung wird vorgeschlagen, dass die Erfassungsmittel im Bereich des anderen Stiftendes, also des dem Gewindebolzen abgewandten Stiftendes, angeordnet sind.

Erfindungsgemäß sind die Erfassungsmittel dazu ausgebildet, die Längsposition des Stifts in Bezug auf die Wechselbuchse zu erfassen.

Eine weitere vorteilhafte Ausgestaltung ist gekennzeichnet durch eine an dem Zylinder angeordnete Anzeigeeinheit für die Position des Stifts in Längsrichtung. Vorzugsweise ist die Anzeigeeinheit dazu ausgebildet, die Längsposition des Stifts in Bezug auf die Wechselbuchse anzuzeigen, vorzugsweise als optische Anzeige.

Eine weitere bevorzugte Ausgestaltung sieht vor, dass der Stift einen signalgebenden oder signalauslösenden Abschnitt aufweist, auf dem der Stift seinen Durchmesser verändert. Zum Beispiel kann der Stift an diesem Ende konisch sich verjüngend gestaltet sein, was durch einen quer dazu gelagerten Messstift ertastbar ist.

Für eine kompakte Bauweise wird vorzugsweise vorgeschlagen, dass der Stift in einer Längsführung in der Wechselbuchse angeordnet ist. Dies hat den zusätzlichen Vorteil, dass mit dem Auswechseln der Wechselbuchse zugleich auch der Stift ausgetauscht wird. Denn beide sind in ihren geometrischen Abmessungen aufeinander und auf den zu spannenden Gewindebolzen abgestimmt.

Gemäß einer weiteren bevorzugten Ausgestaltung ist der Stift an seinem unteren Stiftende im Vergleich zum Stiftquerschnitt radial erweitert ausgebildet. Mit dieser radialen Erweiterung wird erreicht, dass der Kontakt des Stifts mit dem zu spannenden Bolzen stets in einer einheitlichen Ebene erfolgt, nämlich in der Ebene der Stirnfläche des Bolzens und damit in jener Ebene, bis zu der üblicherweise das für den Spannprozess zur Verfügung stehende Außengewinde des Bolzens reicht. Diese Maßnahme ermöglicht eine Beurteilung der tatsächlichen Länge des Gewindeeingriffs auch in solchen Fällen, in denen es ansonsten in der Auswerte- und Steuereinheit zu ungenauen Auswerteergebnissen kommen würde, etwa weil der Bolzen eine zentrale Gewindeeinsenkung aufweist und sich der Stift mit seinem schlanken Ende in dieser, und nicht an der eigentlichen Stirnfläche des Gewindebolzens abstützt.

Mit einer weiteren vorteilhaften Ausgestaltung wird vorgeschlagen, dass die Erweiterung, gegenüberliegend zu der Stirnfläche des Gewindebolzens, mit einem sensorisch arbeitenden, mindestens ein an der Stirnfläche ausgebildetes Merkmal erfassenden Identifizierungselement versehen ist.

Weitere Einzelheiten und Vorteile ergeben sich aus der nachfolgenden Beschreibung eines auf der Zeichnung dargestellten Ausführungsbeispiels. Es zeigen:
- Fig. 1: eine größtenteils geschnitten dargestellte, hydraulisch arbeitende Gewindebolzenspannvorrichtung, aufgesetzt auf einen durch eine Mutter gesicherten Gewindebolzen und abgestützt auf einer Unterlage;
- Fig. 2: die Gewindebolzenspannvorrichtung nach Fig. 1, jedoch nicht auf der Unterlage abgestützt, wobei der Gewindeeingriff zum Gewindebolzen zu kurz ist;
- Fig. 3: die in Fig. 1 mit III bezeichnete Einzelheit in vergrößertem Maßstab;
- Fig. 4: eine teilweise Draufsicht auf die Gewindebolzenspannvorrichtung.

Die hydraulisch betriebene Spannvorrichtung dient dem Anziehen und gegebenenfalls auch dem Lösen hoch belasteter Schraubverbindungen. Die Spannvorrichtung hat die Aufgabe, in Bolzenlängsrichtung für eine gewisse Zeit eine vorgegebene Vorspannkraft auf den Gewindebolzen 3 aufzubringen, um die Möglichkeit zu schaffen, momentenfrei die auf den Gewindebolzen 3 aufgeschraubte Mutter 4 der Schraubverbindung anzuziehen bzw. nachzuziehen. Zu diesem Zweck wird eine Wechselbuchse der im folgenden näher beschriebenen Spannvorrichtung auf das über die Mutter 4 hinaus vorstehende Gewinde des Gewindebolzens 3 aufgeschraubt und anschließend unter hydraulischen Zug gesetzt, wodurch sich der Gewindebolzen 3 in Längsrichtung dehnt.

Die Einschraubtiefe des Gewindebolzens ist begrenzt durch die Länge des Gewindeabschnitts A, die oberhalb der Mutter 4 als Bolzenüberstand zur Verfügung steht. Die zur Verfügung gestellte Einschraubtiefe sollte mindestens gleich dem Gewindedurchmesser des Bolzens sein, vorzugsweise das 1,5 fache. Nur durch die Mindesteinschraubtiefe ist sichergestellt, dass der Gewindebolzen 3 nicht durch den Spannprozess beschädigt wird. Wird ein Mindestwert für die Länge A1 des Gewindeeingriffs nicht eingehalten, kann es zu einem Abreißen des Gewindebolzenendes kommen.

Die Bolzenspannvorrichtung weist ein Gehäuse aus einem oder mehreren Zylindern 1 besteht. Die Fortsetzung des Gehäuses bzw. der Zylinder 1 in Längsrichtung L nach unten hin bildet ein Stützrohr 2, welches an seiner Unterseite offen ist und sich auf jener Unterlage 8, zumeist einem Maschinenteil, abstützt, auf der sich auch die Mutter 4 abstützt. Seitlich an dem aus den Zylindern 1 zusammengesetzten Gehäuse befindet sich ein Hydraulikanschluss 7, über den die Spannvorrichtung mit einer Hydraulikversorgung 6 verbunden ist.

Außerdem kann ein durch Öffnungen in dem Stützrohr 2 hindurch arbeitendes Getriebe 15 vorgesehen sein, mit dem sich die auf den Gewindebolzen 3 geschraubte Mutter 4 drehen lässt. Dieses Drehen ist natürlich nur möglich, wenn die Spannvorrichtung arbeitet, und daher die Mutter 4 nicht durch erhebliche Reibung belastet ist.

Beim Ausführungsbeispiel enthält das Gehäuse mehrere, hier zwei parallel geschaltete Hydraulikzylinder, die über eine mit einem Hydraulikanschluss 7 verbundene, flexible, druckfeste Hydraulikleitung 6A mit einer externen Hydraulikversorgung 6 verbunden sind. In jedem der Zylinder 1 ist, zu dem Zylinder 1 hin abgedichtet, ein Kolben 5 in Längsrichtung L beweglich angeordnet. Bei dem Ausführungsbeispiel sind dies also ein unterer Kolben 5 sowie ein oberer Kolben 5, die zudem nur gemeinsam beweglich sind. Bei Einschalten der Hydraulikversorgung 6 werden durch das Einspeisen von hydraulischem Druck in die Arbeitsräume der Zylinder die darin angeordneten Kolben 5 angehoben. Dies kann entgegen der Wirkung einer sich auf dem obersten Kolben 5 abstützenden Druckfeder 16 erfolgen.

Die Kolben 5 sind starr mit einer in ihnen zentral angeordneten Wechselbuchse 10 verbunden, so dass die Bewegung der Kolben 5 zu einer identischen Bewegung der Wechselbuchse 10 führt. Diese ist mittels geeigneter Maßnahmen austauschbar gestaltet, sie lässt sich also gegen eine Wechselbuchse 10 anderer Geometrie austauschen, wohingegen der Kolben 5 bzw. die Kolben 5 nicht gegen andere Kolben ausgetauscht werden.

Die Wechselbuchse 10 setzt sich einstückig aus einem unteren Kopplungsabschnitt und einem oberen Schaftabschnitt zusammen. Der Kopplungsabschnitt befindet sich innerhalb des Stützrohres 2 und weist ein Innengewinde auf, welches mit dem Außengewinde des Gewindebolzens 3 verschraubbar ist. Der Schaftabschnitt der Wechselbuchse 10 ist umgeben von den Kolben 5, mit denen er, vorzugsweise durch eine Verschraubung, starr verbunden ist.

Zum Spannen des Gewindebolzens wird die Wechselbuchse 10 auf den Gewindeendabschnitt A des Gewindebolzens aufgeschraubt. Durch Einspeisen von hydraulischem Druck heben die Kolben 5 unter Mitnahme der Wechselbuchse 10 an, wodurch es zu einer Längsdehnung des Gewindebolzens 3 kommt. Damit verbunden ist ein Reibungsverlust der Unterseite der Mutter 4, so dass diese sich auf dem Gewinde des Bolzens drehen, d. h. nachziehen lässt.

Für den Spannvorgang wichtig ist, dass die durch die Länge des Gewindeendabschnitts A zur Verfügung stehende Einschraubtiefe des Gewindebolzens 3 mit dem korrespondierenden Innengewinde der Wechselbuchse 10 ausgenutzt wird, und eine ausreichende Länge A1 des Gewindeeingriffs sicher erreicht wird.

Zur Kontrolle der Gewindeeingriffslänge befindet sich zentral in einer Längsbohrung der Wechselbuchse 10 ein Stift 20. Dieser ist mit einem Bund oder einer Erweiterung 21 versehen, gegen den bzw. die sich eine andererseits gegenüber der Wechselbuchse 10 abgestützte Feder 21A abstützt. Auf diese Weise ist der in einer Längsführung 17 der Wechselbuchse längsbewegliche Stift 20 stets durch eine Kraft beaufschlagt, die ihn leicht nach unten, d. h. zu dem Gewindebolzen 3 hin, beaufschlagt.

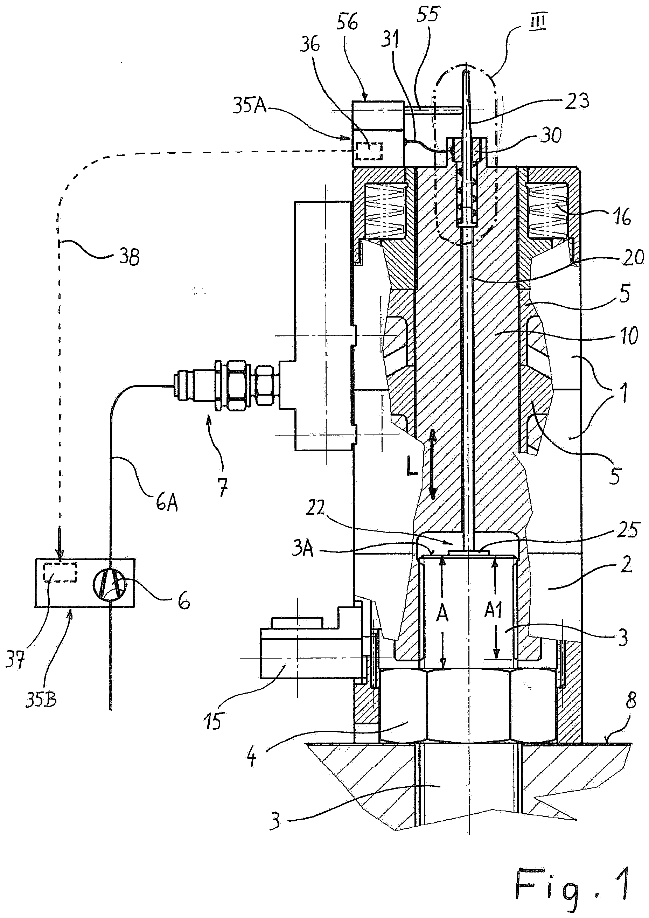

Der Stift 20 stützt sich an seinem unteren Ende 22 axial gegen die Stirnfläche 3A des Gewindebolzens 3 ab. Das andere Ende 23 des Stifts 20 befindet sich im Bereich des oberen Teils der Spannvorrichtung. Dort sind im folgenden noch näher beschrieben technische Maßnahmen getroffen, um die Längsposition des Stiftendes 23 und damit die Position des Stifts 20 in Längsrichtung L zu erfassen. Aus dieser Längsposition ist ableitbar, in welcher Höhe sich das untere Stiftende 22 befindet, was wiederum einen direkten Rückschluss auf die Länge des Gewindeeingriffs A1 am Gewindeendabschnitt A ermöglicht. Denn wäre bei der Situation nach Fig. 1 die Länge A1 des Gewindeeingriffs geringer als dargestellt, wäre der Stift 20 weiter abgesenkt, was aus der Position des oberen Stiftendes 23 relativ zur Wechselbuchse 10 oder relativ zum Zylinder detektierbar ist.

Zur Detektion der Höhenposition des Stifts 20 sind im Bereich des Stiftendes 23 Erfassungsmittel 30 zum Erfassen der Längsposition des Stifts in Bezug auf die Wechselbuchse 10 angeordnet. Diese Mittel 30 sind ausgebildet, die Position des Stifts 20 z. B. auf induktivem Wege zu erfassen. Die elektrischen Positionssignale gelangen über eine Signalleitung 31 zu einer Auswerte- und Steuereinheit 35A, 35B.

Die Auswerte- und Steuereinheit 35A kann oben am Gehäuse der Spannvorrichtung angeordnet sein. Jedoch ist auch eine Anordnung an einem anderen Ort möglich, z. B. lässt sich die Auswerte- und Steuereinheit 35B, wie in Fig. 1 ebenfalls dargestellt, im Bereich oder als Bestandteil der Hydraulikversorgung 6 anordnen.

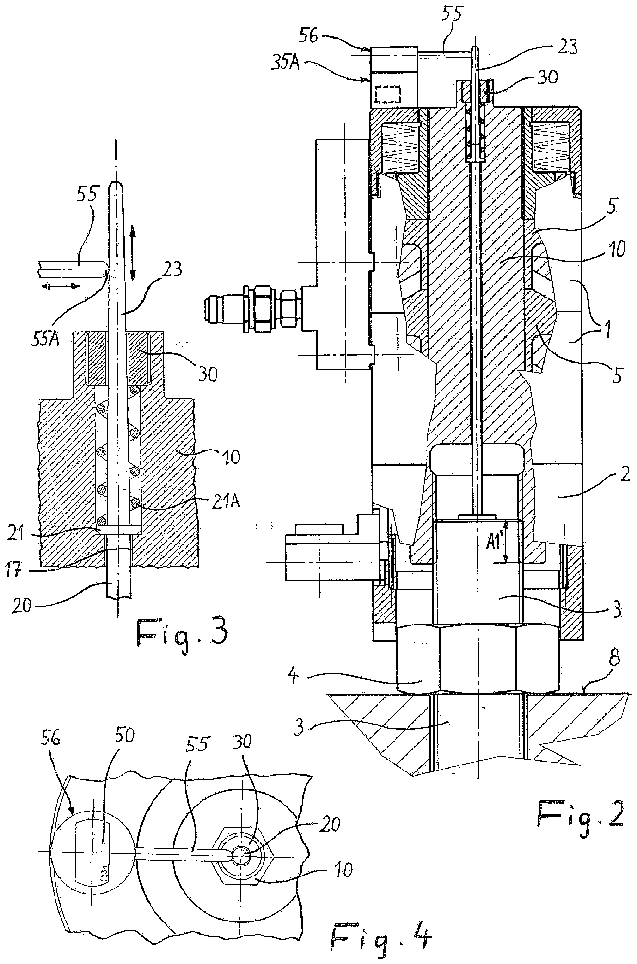

Das in Fig. 3 vergrößert wiedergegebene Erfassungsmittel 30 arbeitet elektrisch-induktiv. Es sitzt fest in einer entsprechenden Aussparung oben in der Wechselbuchse 10. Durch das Erfassungsmittel 30 wird die Längsposition des Stifts 20 in Bezug auf die Wechselbuchse 10 erfasst.

Die auf induktivem Wege erfassten Positionssignale gelangen über die Signalleitung 31 zu der Auswerte- und Steuereinheit 35A bzw. 35B. In dieser erfolgt ein Vergleich der erfassten Längsposition des Stifts 20 mit einem intern vorgegebenen Wert und insbesondere Mindestwert. Wird dieser Wert unterschritten, wie es in Fig. 2 mit dem Wert A1' beispielhaft dargestellt ist, wird intern von einer zu geringen Länge A1' des Gewindeeingriffs ausgegangen. In diesem Fall (Fig. 2) gibt die Auswerte- und Steuereinheit 35A bzw. 35B die Hydraulikversorgung 6 nicht frei, so dass sich kein hydraulischer Druck gegenüber dem Kolben 5 aufbauen kann. Ein Bedienfehler durch unkonzentriertes Ablesen angezeigter Werte oder Größen ist ausgeschlossen.

Die Anordnung der Auswerte- und Steuereinheit unmittelbar am Zylinder 1 ist nicht erforderlich. Gemäß Fig. 1 kann sich die Auswerte- und Steuereinheit 35B auch im Bereich der ventilgesteuerten Hydraulikversorgung 6 befinden, von der die flexible Druckleitung 6A zu dem Hydraulikanschluss 7 am Gerät führt. Befindet sich die Auswerte- und Steuereinheit 35B an oder im Bereich der Hydraulikversorgung 6, so ist ein drahtloser Signalweg 38 von den Erfassungsmitteln 30 sinnvoll. Hierzu ist am Zylinder 1 ein Sendemodul 36 angeordnet, und im Bereich der Hydraulikversorgung das entsprechende Empfangsmodul 37.

Das untere Stiftende 22 kann im Vergleich zum übrigen Stiftquerschnitt radial erweitert sein. Zu diesem Zweck ist das untere Stiftende als eine Scheibe 25 gestaltet, deren radiale Weite größer als der übrige Querschnitt des Stifts 20 ist. Die so gebildete Erweiterung 25 sollte nicht größer sein als die Größe der Stirnfläche 3A des Gewindebolzens. Die radiale Erweiterung 25 führt dazu, dass der Kontakt des Stifts mit dem zu spannenden Bolzen 3 stets in einer einheitlichen Ebene erfolgt, nämlich in der Ebene der Stirnfläche 3A des Bolzens. Dies ermöglicht eine Beurteilung der Länge A1 des tatsächlich in Eingriff stehenden Gewindeüberstandes auch in solchen Fällen, in denen es ansonsten zu ungenauen Auswerteergebnissen kommen würde, etwa weil der Gewindebolzen 3 mit einer zentralen Gewindeeinsenkung versehen ist. Denn würde der Stift 20 unten schlank enden, so würde er sich in dieser Gewindeeinsenkung, und nicht an jener Stirnfläche 3A des Gewindebolzens 3 abstützen, bis zu deren Höhe häufig das Gewinde des Gewindebolzens 3 reicht. Von daher sollte die radiale Weite der Erweiterung 25 mindestens die Größe der Einsenkung betragen.

In der Scheibe 25 kann sich, gegenüberliegend zu der Stirnfläche 3A des Gewindebolzens 3, ein Identifizierungselement befinden. Zu dessen Unterbringung kann die Scheibe 25 mit einer entsprechend bemessenen Ausnehmung versehen sein. Das Identifizierungselement ist dazu ausgebildet, mindestens ein an der Stirnfläche 3A des Gewindebolzens ausgebildetes oder angeordnetes Merkmal zu erfassen. Dieses Merkmal kann eine Kennzeichnung des Bolzens oder der Verschraubung sein, z. B. ein Barcode, oder die Güteklasse des Werkstoffs, aus dem der Gewindebolzen besteht. Aber auch andere Kennzeichnungen, die sich im Bereich der Stirnfläche 3A befinden, können durch das Identifizierungselement detektierbar sein. Das Sensorsignal des Identifizierungselements gelangt über ein Signalkabel zu einer Auswerteeinheit. Dies kann dieselbe Auswerte- und Steuereinheit 35A bzw. 35B sein, zu der auch die Signale des Mittels 30 zum Erfassen der Längsposition des Stifts 20 gelangen. Zur Aufnahme des Signalkabels ist der Stift 20, welcher selbst in der Längsführung 17 der Wechselbuchse 10 axial geführt ist, mit einem vorzugsweise auf der Stiftachse angeordneten Längskanal versehen. Das vom Identifizierungselement kommende Signalkabel ist auf diese Weise längs des Stifts 20 geführt. In der Auswerte- und Steuereinheit 35A werden auch die von dem Identifizierungselement in der Scheibe 25 kommenden Signale in geeigneter Weise ausgewertet, und gegebenenfalls weiter verarbeitet. In der Auswerte- und Steuereinheit 35A, 35B kann ferner eine elektronische Dokumentation der durch das Identifizierungselement erfassten Daten als Teil der Dokumentation des Spannprozesses erfolgen.

Das andere, also obere Stiftende 23 ist als ein signalgebender oder signalauslösender Stiftabschnitt ausgebildet. Das Stiftende 23 ist hier nicht von gleichbleibender Dicke, sondern seine Dicke bzw. sein Durchmesser verändert sich mit der Länge, etwa durch ein in Fig. 3 wiedergegebenes Verjüngen des Stifts 20 zu seinem Ende hin. Ändert der Stift 20 seine Position in Längsrichtung L, bewegt sich ein quer zur Stiftachse gelagerter Messstift 55, der mit seinem einen Ende 55A gegen das Stiftende 23 abgestützt ist, entsprechend quer zu dem Stift 20. Mechanisch erfasst wird bei dieser Variante nicht unmittelbar die Position des Stifts 20, sondern die Position des zusätzlichen Messstifts 55. Dieser ist an seinem anderen Ende, innerhalb eines an dem Zylinder 1 befestigten Messaufnehmergehäuses 56, mit einer Wegmesseinrichtung mit Anzeigeeinheit 50 (Fig. 4) verbunden. Die Anzeigeeinheit 50 gibt die mechanisch erfasste Höhenposition des Stifts 20 optisch oder in Zahlenwerten wieder, was dem Maschinenbediener eine zusätzliche Kontrolle der Gewindeeingriffslänge ermöglicht.

### Bezugszeichenliste

- 1: Zylinder
- 2: Stützrohr
- 3: Gewindebolzen
- 3A: Stirnfläche Gewindebolzen
- 3B: Einsenkung
- 4: Mutter
- 5: Kolben
- 6: Hydraulikversorgung
- 6A: Druckleitung
- 7: Hydraulikanschluss
- 8: Unterlage
- 10: Wechselbuchse
- 15: Getriebe
- 16: Druckfeder
- 17: Längsführung
- 20: Stift
- 21: Erweiterung
- 21A: Feder
- 22: Stiftende
- 23: Stiftende
- 25: Erweiterung, Scheibe
- 30: Mittel zum Erfassen der Längsposition
- 31: Signalleitung
- 35A: Auswerte- und Steuereinheit
- 35B: Auswerte- und Steuereinheit
- 36: Sendemodul
- 37: Empfangsmodul
- 38: Signalweg
- 50: Anzeigeeinheit
- 55: Messstift
- 55A: Stiftende
- 56: Messaufnehmergehäuse
- A: Gewindeendabschnitt
- A1: Länge Gewindeeingriff
- A1': Länge Gewindeeingriff
- L: Längsrichtung

## Patentansprüche

1. Spannvorrichtung zum Dehnen eines Gewindebolzens durch Zug an dessen Gewindeendabschnitt (A), mit einem den Gewindeendabschnitt (A) umgebenden Stützrohr (2), einem in Verlängerung des Stützrohrs (2) angeordneten Zylinder (1) mit mindestens einem darin in Längsrichtung (L) bewegbaren, mit einer Hydraulikversorgung (6) verbindbaren Kolben (5), einer mit dem Gewindeendabschnitt (A) verschraubbaren, durch den Kolben (5) axial mitnehmbar ausgebildeten Wechselbuchse (10), und einem in Längsrichtung (L) beweglich angeordneten Stift (20), dessen Stiftende (22) gegen das den Gewindeendabschnitt (A) aufweisende Ende des Gewindebolzens in Längsrichtung abstützbar ist, **gekennzeichnet durch**
- Mittel (30) zum Erfassen der Position des Stifts (20) in Längsrichtung (L) in Bezug auf die Wechselbuchse (10),
- eine mit den Erfassungsmitteln (30) verbundene Auswerte- und Steuereinheit (35A, 35B), durch welche die Hydraulikversorgung (6) freigebbar ist, sofern die Längsposition des Stifts einem intern vorgegebenen Mindestpositionswert entspricht, und daher eine ausreichende tatsächliche Gewindeeingriffslänge zwischen der Wechselbuchse (10) und dem Ende des Gewindebolzens vorhanden ist.

2. Spannvorrichtung nach Anspruch 1, **dadurch gekennzeichnet, dass** Bestandteil der Auswerte- und Steuereinheit (35A, 35B) ein drahtloser Signalweg mit einem an dem Zylinder (1) angeordneten Sendemodul (36) und einem im Bereich der Hydraulikversorgung (6) angeordneten Empfangsmodul (37) ist.

3. Spannvorrichtung nach Anspruch 1 oder 2, **gekennzeichnet durch** induktiv arbeitende Mittel (30) zum Erfassen der Position des Stifts (20).

4. Spannvorrichtung nach einem der vorangehenden Ansprüche, **dadurch gekennzeichnet, dass** die Erfassungsmittel (30) im Bereich des anderen Stiftendes (23) angeordnet sind.

5. Spannvorrichtung nach einem der vorangehenden Ansprüche, **gekennzeichnet durch** eine an dem Zylinder (1) angeordnete Anzeigeeinheit (50) für die Position des Stifts (20) in Längsrichtung (L).

6. Spannvorrichtung nach Anspruch 5, **dadurch gekennzeichnet, dass** der Stift (20) einen signalgebenden oder signalauslösenden Abschnitt (23) aufweist, auf dem der Stift (20) seinen Durchmesser verändert.

7. Spannvorrichtung nach einem der vorangehenden Ansprüche, **dadurch gekennzeichnet, dass** der Stift (20) in einer Längsführung (17) in der Wechselbuchse (10) angeordnet ist.

8. Spannvorrichtung nach einem der vorangehenden Ansprüche, **dadurch gekennzeichnet, dass** der Stift (20) an seinem unteren Stiftende (22) im Vergleich zum Stiftquerschnitt radial erweitert (25) ausgebildet ist.

9. Spannvorrichtung nach einem der vorangehenden Ansprüche, **dadurch gekennzeichnet, dass** die Erweiterung (25), gegenüberliegend zu der Stirnfläche des Gewindebolzens, mit einem sensorisch arbeitenden, mindestens ein an der Stirnfläche ausgebildetes Me

## Claims

1. Tensioning device for stretching a threaded bolt by pulling on its threaded end portion (A), comprising a support tube (2) which surrounds the threaded end portion (A); a cylinder (1) which is arranged in the extension of the support tube (2) and has at least one piston (5) which is movable in said cylinder in the longitudinal direction (L) and which can be connected to a hydraulic supply (6); an exchange socket (10) which can be screwed to the threaded end portion (A) and which is designed such that it can be carried along axially by the piston (5); and a pin (20) which is arranged movably in the longitudinal direction (L) and whose pin end (22) can be supported against the end, which has the threaded end portion (A), of the threaded bolt in the longitudinal direction, **characterized by**
- means (30) for detecting the position of the pin (20) in the longitudinal direction (L) with respect to the exchange socket (10),
- an evaluation and control unit (35A, 35B) which is connected to the detecting means (30) and by means of which the hydraulic supply (6) can be released if the longitudinal position of the pin corresponds to an internally predetermined minimum position value, and therefore a sufficient actual thread engagement length between the exchange socket (10) and the end of the threaded bolt is present.

2. Tensioning device according to Claim 1, **characterized in that** a constituent part of the evaluation and control unit (35A, 35B) is a wireless signal path having a transmitting module (36) arranged on the cylinder (1) and having a receiving module (37) arranged in the region of the hydraulic supply (6).

3. Tensioning device according to Claim 1 or 2, **characterized by** inductively operating means (30) for detecting the position of the pin (20).

4. Tensioning device according to one of the preceding claims, **characterized in that** the detection means (30) are arranged in the region of the other pin end (23).

5. Tensioning device according to one of the preceding claims, **characterized by** a display unit (50) arranged on the cylinder (1) for indicating the position of the pin (20) in the longitudinal direction (L).

6. Tensioning device according to Claim 5, **characterized in that** the pin (20) has a signal-transmitting or signal-triggering portion (23) on which the pin (20) changes its diameter.

7. Tensioning device according to one of the preceding claims, **characterized in that** the pin (20) is arranged in a longitudinal guide (17) in the exchange socket (10).

8. Tensioning device according to one of the preceding claims, **characterized in that** the pin (20) is designed to be radially widened (25) at its lower pin end (22) in comparison to the pin cross section.

9. Tensioning device according to one of the preceding claims, **characterized in that** the widening (25) is provided, opposite the end face of the threaded bolt, with an identification element which operates as a sensor and detects at least one feature formed on the end face.

## Revendications

1. Dispositif de serrage pour l'étirement d'un boulon fileté par traction sur sa section d'extrémité de filetage (A), comprenant un tube de support (2) entourant la section d'extrémité de filetage (A), un cylindre (1) agencé dans le prolongement du tube de support (2), comprenant au moins un piston (5) mobile dans celui-ci dans la direction longitudinale (L), raccordable avec une alimentation hydraulique (6), une douille de remplacement (10) pouvant être vissée avec la section d'extrémité de filetage (A), configurée sous forme entraînable axialement par le piston (5), et une tige (20) agencée sous forme mobile dans la direction longitudinale (L), dont l'extrémité de tige (22) peut être supportée dans la direction longitudinale contre l'extrémité, comprenant la section d'extrémité de filetage (A), du boulon fileté, **caractérisé par**
- des moyens (30) pour déterminer la position de la tige (20) dans la direction longitudinale (L) par rapport à la douille de remplacement (10),
- une unité d'évaluation et de commande (35A, 35B) raccordée avec les moyens de détermination (30), par laquelle l'alimentation hydraulique (6) peut être libérée, dans la mesure où la position longitudinale de la tige correspond à une valeur de position minimale prédéterminée en interne, et une longueur de prise de filetage effective suffisante est par conséquent présente entre la douille de remplacement (10) et l'extrémité du boulon fileté.

2. Dispositif de serrage selon la revendication 1, **caractérisé en ce qu'**un constituant de l'unité d'évaluation et de commande (35A, 35B) est une voie de signalisation sans fil comprenant un module d'envoi (36) agencé sur le cylindre (1) et un module de réception (37) agencé dans la zone de l'alimentation hydraulique (6).

3. Dispositif de serrage selon la revendication 1 ou 2, **caractérisé par** des moyens (30) fonctionnant par induction pour la détermination de la position de la tige (20).

4. Dispositif de serrage selon l'une quelconque des revendications précédentes, **caractérisé en ce que** les moyens de détermination (30) sont agencés dans la zone de l'autre extrémité de tige (23).

5. Dispositif de serrage selon l'une quelconque des revendications précédentes, **caractérisé par** une unité de visualisation (50) agencée sur le cylindre (1) pour la position de la tige (20) dans la direction longitudinale (L).

6. Dispositif de serrage selon la revendication 5, **caractérisé en ce que** la tige (20) comprend une section émettant un signal ou déclenchant un signal (23), au niveau de laquelle la tige (20) modifie son diamètre.

7. Dispositif de serrage selon l'une quelconque des revendications précédentes, **caractérisé en ce que** la tige (20) est agencée dans un guide longitudinal (17) dans la douille de remplacement (10).

8. Dispositif de serrage selon l'une quelconque des revendications précédentes, **caractérisé en ce que** la tige (20) est configurée sous forme élargie radialement (25) au niveau de son extrémité de tige inférieure (22) en comparaison de la section transversale de tige.

9. Dispositif de serrage selon l'une quelconque des revendications précédentes, **caractérisé en ce que** l'élargissement (25), à l'opposé de la surface frontale du boulon fileté, est pourvu d'un élément d'identification fonctionnant à la manière d'un capteur, détectant au moins une caractéristique réalisée sur la surface frontale.
